Europäisches Patentamt

European Patent Office

Office européen des brevets

(19)

(11) Veröffentlichungsnummer : **0 354 317 B1**

(12) # EUROPÄISCHE PATENTSCHRIFT

(45) Veröffentlichungstag der Patentschrift :
**06.05.92 Patentblatt 92/19**

(51) Int. Cl.$^5$ : **B01D 29/15,** B01D 29/52,
B01D 29/90, B01D 37/02

(21) Anmeldenummer : **89110433.3**

(22) Anmeldetag : **09.06.89**

(54) **Filtrieranordnung.**

(30) Priorität : **09.08.88 CH 2994/88**

(43) Veröffentlichungstag der Anmeldung :
**14.02.90 Patentblatt 90/07**

(45) Bekanntmachung des Hinweises auf die
Patenterteilung :
**06.05.92 Patentblatt 92/19**

(84) Benannte Vertragsstaaten :
**CH DE LI SE**

(56) Entgegenhaltungen :
**EP-A- 0 209 348**
**GB-A- 993 184**
**US-A- 3 398 831**
**US-A- 3 498 460**

(73) Patentinhaber : **ASEA BROWN BOVERI AG**
**Haselstrasse**
**CH-5401 Baden (CH)**

(72) Erfinder : **Slavitschek, Gert**
**Steinstrasse 20b**
**CH-5406 Baden (CH)**
Erfinder : **Vollmann, Wilhelm**
**Haufroosstrasse 2**
**CH-5452 Oberrohrdorf (CH)**

EP 0 354 317 B1

Jouve, 18, rue Saint-Denis, 75001 PARIS

## Beschreibung

Technisches Gebiet

Die Erfindung betrifft eine Filtrieranordnung, insbesondere zum Reinigen von Kondensat einer nuklear beheizten Kraftwerksanlage, im wesentlichen bestehend aus einem geschlossenen Behälter mit einem Zuströmrohr und einem Auslassrohr sowie einem im Behälter angeordneten Rohrboden, welcher das Behälterinnere in eine Filtratkammer und in eine Trübekammer unterteilt und der eine Mehrzahl von anschwemmbaren, reihenweise gestaffelten Filterkerzen trägt, die mit ihrer wirksamen Fläche in die Trübekammer hineinragen und deren hohler Innenraum mit der Filtratkammer kommuniziert, wobei das Einlassrohr im wesentlichen zentral im Rohrboden einsitzt und mit seiner Mündung gegen eine in der Trübekammer angeordnete Prallplatte gerichtet ist,

Kernkraftwerke, insbesondere solche mit Siedewasserreaktoren, benötigen zur Erreichung der erforderlichen Reaktorwasserqualität eine Kondensat-Reinigungsanlage mit derartigen Filtrieranordnungen. Es handelt sich dabei um sogenannte Pulverharz-Anschwemmfilter, die neben der ionalen Austauschkapazität auch gute mechanische Filtrationseigenschaften aufweisen.

Stand der Technik

Eine Filtrieranordnung der eingangs genannten Art ist bekannt aus der US-A-4 609 462. Vielfach befriedigen solche Pulverharz-Anschwemmfilter nicht in Bezug auf die Standzeiten. Insbesondere nachteilig bei kurzen Standzeiten sind die dadurch erhöhten Mengen an anfallenden radioaktiv kontaminierten Harzen, die als Abfälle langfristig gelagert werden müssen.

Die Ursachen für dieses Standzeitproblem sind teilweise chemischer und teilweise hydraulischer Natur. Anlässlich von Untersuchungen an ausgeführten Anlagen konnte als mutmassliche Ursache für die nach einer gewissen Betriebszeit stark sinkende Standzeit folgendes festgestellt werden:
– Erosion der Harze von den Filterkerzen durch örtlich zu hohe Strömungsgeschwindigkeiten;
– Verstopfung des Kerzengewebes an den erodierten Stellen durch Eisenoxyde, so dass eine Filtration an diesen Stellen nicht mehr möglich ist;
– Irreversible Verstopfung der Strömungswege in den an sich noch gesunden Bereichen durch die abgelösten Harze und damit weitere Reduktion der aktiven Filterfläche.

Aus Vergleichsversuchen ist ebenfalls bekannt, dass bei reduzierten Filterdurchsätzen und hieraus resultierenden kleineren Strömungsgeschwindigkeiten die Standzeit überproportional ansteigen kann, beziehungsweise dass Standzeitprobleme nur in erheblich geringerem Umfang auftreten.

Darstellung der Erfindung

Hier setzt nun die Erfindung ein. Ihr liegt die Aufgabe zugrunde, bei einer Filteranordnung der eingangs genannten Art Massnahmen zur Reduktion der hohen örtlichen Strömungsgeschwindigkeiten auch bei vollem Durchsatz des Apparates zu treffen.

Erfindungsgemäss wird diese Aufgabe dadurch gelöst,
– dass die Prallplatte an ihrer dem Rohrboden zugekehrten Seite mit einem polygonalen oder zylindrischen Lochkragen versehen ist, dessen Wand parallel zur Längsachse der Filterkerzen verläuft,
– dass die Prallplatte zentral ausgespart ist und an ihrer dem Zuströmrohr abgekehrten Seite mit einem Ueberströmrohr versehen ist, welches sich im wesentlichen über die ganze wirksame Höhe der Filterkerzen erstreckt und mit seiner oberen Mündung gegen eine Stossplatte gerichtet ist, welche sich in der Trübekammer oberhalb der Filterkerzen annähernd senkrecht zur Längsachse des Behälters erstreckt,
– und dass die Stossplatte an ihrer den Filterkerzen zugekehrten Seite mit mindestens einem ersten, polygonalen oder zylindrischen Lochkragen ausgerüstet ist.

Der Vorteil der Erfindung ist insbesondere darin zu erblicken, dass es mit einfachen Mitteln gelingt, eine Strömungsaufteilung in mindestens zwei Teilströme mit jeweils reduzierter Geschwindigkeit durchzuführen, wobei beide Teilströme zudem noch eine Drosselung und Vergleichmässigung durch die Beaufschlagung der Lochkragen erfahren. Bestehende Anlagen sind ohne weiteres mit diesen einfachen Mitteln nachrüstbar.

Besonders zweckmässig ist es, wenn das Ueberströmrohr perforiert ist und wenn in seinem Innern ein koaxialer zylindrischer Verdrängungskörper untergebracht ist, der an seinem oberen Ende stumpf mit der Mündung des Ueberströmrohres abschliesst und der an seinem unteren Ende strömungskonform ausgebildet ist und in die Aussparung in der Prallplatte hineinragt. Dadurch können die Filterkerzen, die eigentliche Drucksenken darstellen, bereits Arbeitsmittel aus dem durchströmten Ueberströmrohr entnehmen, bevor der obere Teil umgelenkt wird. Die zylindrische Form des Verdrängungskörpers hat dabei gegenüber andern Formen den Vorteil, dass die Längsgeschwindigkeit an den Filterkerzen der innersten Reihe durch den austretenden Strahl gering und über die ganze Kerzenhöhe zumindest annähernd gleichbleibend ist.

Kurze Beschreibung der Zeichnung

In der Zeichnung sind mehrere Ausführungsbeispiele der Erfindung anhand eines Kondensatreinigungsapparates vereinfacht dargestellt.

Es zeigen

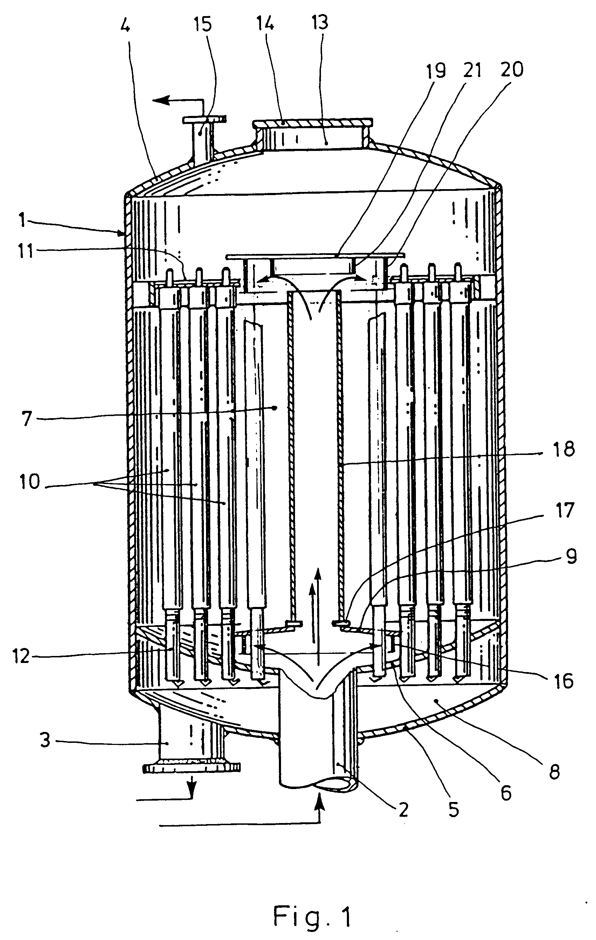

Fig. 1 einen teilweisen Längsschnitt durch eine Filtrieranordnung

Fig. 2 schematisch eine Ausführungsvariante der Filtrieranordnung

Fig. 3 ein Schaubild Geschwindigkeitsverteilung in den Strömungskanälen

In der Zeichnung sind nur die für das Verständnis der Erfindung wesentlichen Teile dargestellt. In den verschiedenen Figuren sind gleiche Teile jeweils mit den gleichen Bezugszeichen versehen. Die Strömungsrichtung des Arbeitsmediums ist mit Pfeilen bezeichnet.

Weg zur Ausführung der Erfindung

Die Filtrieranordnung umfasst einen senkrecht stehenden, allseits geschlossenen Behälter 1 mit einem Zuströmrohr 2 und einem Auslassrohr 3. Der Behälter 1 ist in seiner Längserstreckung zylindrisch und ist vorzugsweise aus Stahl hergestellt. Oben schliesst er mit einem nach aussen gewölbten Deckel 4 und unten mit einem ebenfalls nach aussen gewölbten Boden 5 ab. Das Behälterinnere ist durch einen sich konvex nach unten wölbenden Rohrboden 6 in eine Trübekammer 7 und in eine Filtratkammer 8 unterteilt. Hierzu ist er mit der Innenwandung des Behälters verschweisst.

Das Zuströmrohr 2 ist zentral durch den Boden 5 in den Behälter 1 eingeführt und ist durch die Filtratkammer 8 bis zum Rohrboden 6 hindurchgeführt. Mit seiner Mündung ist das Zuströmrohr mit dem Rohrboden verschweisst. Die Mündung ist gegen eine in der Trübekammer auf geeignete Art befestigte Prallplatte 9 gerichtet, so dass das in die Trübekammer eingeführte Strömungsmittel zumindest teilweise radial nach aussen verteilt wird.

In der Trübekammer ist eine Mehrzahl von Filterkerzen 10 eingebaut, durch die das Arbeitsmittel hindurchtreten muss, bevor es in die Filtratkammer abfliesst und aus dem Behälter über die Auslassleitung 3 abgezogen wird. Diese Filterkerzen sind reihenweise gestaffelt, wobei eine Reihe jeweils entweder einen kreisförmigen oder einen beliebigen polygonalen Grundriss aufweisen kann. Die Kerzen sind am oberen Ende durch eine nicht näher spezifizierte Halterung 11 in ihrer Lage gehalten. Diese sollte in der Weise konzipiert sein, dass die Filterkerzen, welche jeweils auf einem Filtersitz 12 im Rohrboden 6 befestigt sind, ausbaubar sind.

Die Filtersitze 12, welche die Filterkerzen 10 tragen, umfassen ein kleines Rohr aus Stahl oder dergleichen, das sich durch Durchbrechungen im Rohrboden 6 erstreckt und mit dem Rohrboden verschweisst ist. Die Sitze sind parallel zur Längsachse des Behälters gerichtet und verbinden mit ihrem hohlen Innern die Trübekammer mit der Filtratkammer.

Die an sich bekannten, senkrecht angeordneten Filterkerzen 10 bestehen aus einem starren Kernrohr aus korrosionsbeständigem Material, welches mit Oeffnungen versehen ist und aus einem das Kernrohr umschliessenden Siebmaterial, das mit einer Anschwemmschicht aus einem körnigen Filterhilfsmittel überzogen ist. Dieses Hilfsmittel wird in der Regel aus Ionenaustauscher- Harzteilchen gebildet, die neben der mechanischen Filterwirkung auch gelöste ionale Verunreinigungen zurückbehalten.

Wenn infolge des Betriebes das als Kerzenüberzug aufgebrachte Filterhilfsmittel erschöpft ist, muss es ersetzt werden. Die Filterphase wird dann beendet und zum Entleeren des Behälters wird das Arbeitsmittel aus der Trübekammer über das Zuströmrohr abgezogen.

Zu Handhabungszwecken ist im Deckel 4 ein Mannloch 13 mit einem Verschluss 14 vorgesehen. Desweiteren ist im Deckel 4 eine Belüftungs- resp. Entlüftungsleitung 15 für den Füllvorgang vorgesehen.

Soweit sind Filtrieranordnungen bekannt. Um nun die bekannten Unzulänglichkeiten in der Zuströmung zu den Filterkerzen 10 zu vermeiden, sind folgende Massnahmen getroffen:

Zunächst ist die gewölbte Prallplatte 9 an ihrer dem Rohrboden 6 zugekehrten Seite mit einem Lochkragen 16 versehen. Es handelt sich dabei beispielsweise um ein Lochblech mit einem Oeffnungsverhältnis von ca. 40%. Die Wand dieses Lochbleches verläuft parallel zur Längsachse der Filterkerzen und bildet einen zylinderförmigen oder polygonalen Kragen, je nachdem, wie der gestaffelte Kerzenaufbau vorliegt. Im gezeigten Fall hängt der Kragen zwischen der innersten und der zweitinnersten Kerzenreihe. Er weist eine Höhe auf, die zwecks ordentlicher Funktionsweise mindestens der Hälfte der lichten Weite zwischen Prallplatte 9 und Rohrboden 6 entspricht. Allein mit dieser Massnahme wird bereits ein beträchtliches Ergebnis erzielt. Die Strömung

EP 0 354 317 B1

zu den Filterkerzen bleibt eindeutig radial und neigt nicht - wie dies bei dem eine Stauwirkung ausübenden Kragen zu vermuten wäre - zur Bildung eines Ringwirbels. Ueber der durchströmten Kanalhöhe sind die Geschwindigkeitsspitzen abgebaut und es herrscht nirgends eine Rückströmung, wie dies beispielsweise ohne Lochkragen im Bereich des Rohrbodens feststellbar ist.

Besondere Wirkung wird indes nur in Funktionsverschmelzung mit der zweiten Massnahme erzielt. Diese hat zum Zweck, die Gesamtströmung in Tielströme zu unterteilen. Hierzu ist die Prallplatte 9 zentral ausgespart, so dass ein Teil des zuströmenden Arbeitsmittels nicht radial umgelenkt wird. Ueber eine Blende 17 hat man nun ein geeignetes Mittel in der Hand, die Aufteilung vorzunehmen. Versuche haben ergeben, dass eine hälftige Aufteilung des Massenstromes gute Ergebnisse bringt.

Der durch die Blende 17 durchtretende Teilstrom gelangt in ein Ueberstromrohr 18, welches auf der Prallplatte 9 auf deren dem Zuströmrohr 2 abgewandten Seite aufgesetzt ist. Dieses Rohr 18 erstreckt sich über die ganze wirksame Länge der Filterkerzen 10. Die obere Mündung des Ueberstromrohres 18 ist gegen eine Stossplatte 19 gerichtet zwecks Bildung eines Pralldiffusors. Die Stossplatte 19, welche sich senkrecht zur Längsachse des Behälters erstreckt, ist auf nicht dargestellte Weise im Trüberaum oberhalb der Kerzenhalterung 11 befestigt.

Als dritte Massnahme ist schliesslich auch diese Stossplatte an ihrer den Filterkerzen 10 zugekehrten Seite mit einem ersten Lochkragen 20 ausgerüstet. Seine Höhe entspricht in etwa dem Abstand zwischen Stossplattenunterseite und Mündung des Ueberströmrohres 18. Seine Funktionsweise entspricht jener des Lochkragens 16. Eine nochmalige Verbesserung der Strömungsverhältnisse wurde dadurch erzielt, dass diesem ersten Lochkragen ein zweiter Lochkragen 21 vorgelagert wurde. Dieser Kragen 21 ist konzentrisch zum ersten Kragen 20, weist jedoch eine kleinere Höhe auf und ist ebenfalls an der Stossplatte 19 befestigt. Diese dritte Massnahme bewirkt im wesentlichen, dass hohe unsymmetrische Geschwindigkeitsspitzen und grosse Rückströmgebiete unterhalb der Stossplatte vermieden werden.

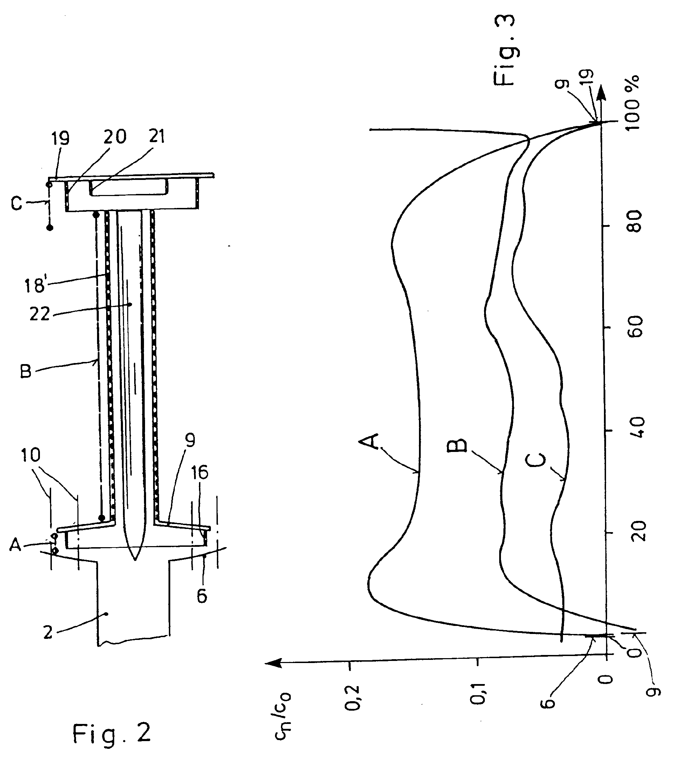

Fig. 2 zeigt in vereinfachter Form eine zweite Ausführungsform der Erfindung. Hier ist das Ueberströmrohr 18′ perforiert ausgebildet. Es kann sich bei diesem Rohr ebenfalls um ein Lochblech mit einem Oeffnungsverhältnis von ca. 40% handeln. Dadurch ist eine weitere Abströmmöglichkeit für das im Innern des Ueberströmrohres aufsteigende Arbeitsmittel geschaffen. Im Rohrinnern ist ein zylindrischer Verdrängungskörper 22 untergebracht. Dessen oberes Ende ist stumpf ausgebildet und schliesst mit der Mündung des Rohres 18′ ab. Sein unteres Ende ist strömungskonform ausgebildet und ragt in die Aussparung der Prallplatte 9 hinein. Dadurch übt er die Funktion der oben besprochenen Blende 17 aus. Die Abströmung aus dem gelochten Rohr erfolgt nicht radial, sondern ist längsgerichtet. Mit dieser Konfiguration wird somit eine sehr gleichmässige, sich gegenseitig in stabilisierender Weise beeinflussende Längsströmung innerhalb und ausserhalb des Ueberströmrohres 18′ erzielt.

Die Kurvenzüge in Fig.3 zeigen den quantitativen und qualitativen Verlauf der Geschwindigkeiten bei der Filtrieranordnung gemäss Fig.2. Die jeweiligen Messstellen sind in der Fig.2 mit A, B und C bezeichnet. Es versteht sich, dass auf die Bekanntgabe von Absolutwerten verzichtet wird, da diese wegen ihrer Abhängigkeit von allzu zahlreichen Parametern ohnehin ungenügende Aussagekraft besitzen. Auf der Abzisse sind die jeweiligen Kanalhöhen in (%) aufgetragen, auf der Ordinate das Verhältnis der örtlichen Strömungsgeschwindigkeit zur Zuströmgeschwindigkeit im Zuströmrohr 2. 100% Kanalhöhe bei der Messung C entsprechen dabei ca. der doppelten Höhe des Lochkragens 20. Es ist zu erkennen, dass an keiner Stelle grosse Geschwindigkeitsspitzen vorherrschen, dass keine Rückströmungen vorliegen und dass grundsätzlich die örtliche Geschwindigkeiten so niedrige Werte aufweisen, dass mit einer Harzerosion auf der Stauseite der besonders gefährdeten Kerzen der inneren Reihe nicht zu rechnen ist.

Selbstverständlich ist die Erfindung nicht auf die gezeigten und beschriebenen Beispiele von Wasserreinigung beschränkt, sondern sie ist grundsätzlich auch im Rahmen der Reinigung von andern Flüssigkeiten oder von Gasen anwendbar. In Abweichung zur gezeigten Anordnung kann die Stossplatte beispielsweise auch gekrümmt ausgeführt werden. Desgleichen könnten die Lochkragen statt an der Stossplatte genau so gut über Rippen am Uebersrömrohr befestigt sein.

**Patentansprüche**

1. Filtrieranordnung, insbesondere zum Reinigen von Kondensat einer nuklear beheizten Kraftwerksanlage, im wesentlichen bestehend aus einem geschlossenen Behälter (1)mit einem Zuströmrohr (2) und einem Auslassrohr 3)sowie einem im Behälter angeordneten Rohrboden (6), welcher das Behälterinnere in eine Filtratkammer (8) und in eine Trübekammer (7) unterteilt und der eine Mehrzahl von anschwemmbaren, reihenweise gestaffelten Filterkerzen (10) trägt, die mit ihrer wirksamen Fläche in die Trübekammer hineinragen und deren hohler Innenraum mit der Filtratkammer kommuniziert, wobei das Zuströmrohr (2) im wesentlichen zen-

4

tral im Rohrboden 6) einsitzt und mit seiner Mündung gegen eine in der Trübekammer angeordnete Prallplatte (9) gerichtet ist,
dadurch gekennzeichnet,
– dass die Prallplatte (9) in ihrer dem Rohrboden (6) zugekehrten Seite mit einem, polygonalen oder zylindrischen Lochkragen (16) versehen ist, dessen Wand parallel zur Längsachse der Filterkerzen verläuft,
– dass die Prallplatte (9) zentral ausgespart ist und an ihrer dem Zuströmrohr (2) abgekehrten Seite mit einem Ueberströmrohr (18, 18') versehen ist, welches sich im wesentlichen über die ganze wirksame Höhe der Filterkerzen (10) erstreckt und mit seiner oberen Mündung gegen eine Stossplatte (19) gerichtet ist, welche sich in der Trübekammer (7) oberhalb der Filterkerzen annähernd senkrecht zur Längsachse des Behälters erstreckt,
– und dass die Stossplatte (19) an ihrer den Filterkerzen zugekehrten Seite mit mindestens einem ersten, polygonalen oder zylindrischen Lochkragen (20) ausgerüstet ist.

2. Filtrieranordnung nach Anspruch 1, dadurch gekennzeichnet, dass der Lochkragen (16) zwischen der innersten und der zweitinnersten Reihe der Filterkerzen (10) angeordnet ist, und sich über mehr als die Hälfte der lichten Weite zwischen Prallplatte (9) und Rohrboden (6) erstreckt.

3. Filtrieranordnung nach Anspruch 1, dadurch gekennzeichnet, dass der erste Lochkragen (20) eine Höhe aufweist, die dem Abstand zwischen Stossplatte (19) und Mündung des Ueberströmrohres (18, 18') entspricht.

4. Filtrieranordnung nach Anspruch 3, dadurch gekennzeichnet, dass dem ersten Lochkragen (20) einer zweiter, konzentrischer Lochkragen (21) mit geringerer Höhe vorgelagert ist, der ebenfalls an der Stossplatte (19) befestigt ist.

5. Filtrieranordnung nach Anspruch 1, dadurch gekennzeichnet, dass im einlauf des Ueberstromrohres (18) eine Blende (17) eingebaut ist.

6. Filtrieranordnung nach einem der Ansprüch 1 bis 4, dadurch gekennzeichnet, dass das Ueberströmrohr (18') perforiert ist und dass in seinem Innern ein koaxialer zylindrischer Verdrängungskörper (22) untergebracht ist, der an seinem oberen Ende stumpf mit der Mündung des Ueberströmrohres abschliesst.

7. Filtrieranordnung nach Anspruch 6, dadurch gekennzeichnet, dass das untere Ende des Verdrängungskörpers (22) strömungskonform ausgebildet ist und in die Aussparung in der Prallplatte (9) hineinragt.

## Claims

1. Filtration arrangement, in particular for purifying condensate from a power station installation heated by nuclear energy, essentially consisting of a closed vessel (1) having an inflow pipe (2) and an outlet pipe (3) and also a tube plate (6) which is located in the vessel and divides the vessel interior into a filtrate chamber (8) and a pulp chamber (7) and which carries a plurality of coatable filter cartridges (10) which are staggered in rows and project with their active surface into the pulp chamber and whose hollow interior communicates with the filtrate chamber, the inflow pipe (2) being seated essentially centrally in the tube plate (6) and its end pointing towards an impingement plate (9) located in the pulp chamber,
characterised
– in that the impingement plate (9) is provided, on its side facing the tube plate (6) with a polygonal or cylindrical perforated collar (16) whose wall runs parallel to the longitudinal axis of the filter cartridges,
– in that the impingement plate (9) is centrally recessed and is provided, on its side facing away from the inflow pipe (2), with an overflow pipe (18, 18') which extends essentially over the entire effective height of the filter cartridges (10) and points with its upper end towards an impact plate (19) which extends in the pulp chamber (7) above the filter cartridges approximately perpendicularly to the longitudinal axis of the vessel,
– and in that the impact plate (19) is fitted, on its side facing the filter cartridges, with at least one first, polygonal or cylindrical perforated collar (20).

2. Filtration arrangement according to Claim 1, characterised in that the perforated collar (16) is located between the innermost and the second-innermost row of the filter cartridges (10) and extends over more than half of the clear width between the impingement plate (9) and the tube plate (6).

3. Filtration arrangement according to Claim 1, characterised in that the first perforated collar (20) has a height which corresponds to the distance between the impact plate (19) and the end of the overflow pipe (18, 18').

4. Filtration arrangement according to Claim 3, characterised in that a second, concentric perforated collar (21) of small height, which is likewise fixed to the impact plate (19), is located in front of the first perforated collar (20).

5. Filtration arrangement according to Claim 1, characterised in that a restrictor plate (17) is installed in the inlet of the overflow pipe (18).

6. Filtration arrangement according to one of claims 1 to 4, characterised in that the overflow pipe (18′) is perforated and in that, in the interior thereof, a coaxial cylindrical displacement body (22) is accommodated whose upper end is flush with the end of the overflow pipe.

7. Filtration arrangement according to Claim 6, characterised in that the lower end of the displacement body (22) has a shape conforming to the flow and projects into the recess in the impingement plate (9).

## Revendications

1. Dispositif de filtrage, en particulier pour épurer le condensat d'une installation de centrale chauffée à l'énergie nucléaire, se composant essentiellement d'une enceinte fermée (1) avec un tube d'entrée (2) et un tube de sortie (3) ainsi que d'un plateau à tubes (6) disposé dans l'enceinte, qui subdivise l'intérieur de l'enceinte en une chambre à filtrat (8) et une chambre à pulpe (7) et qui porte une pluralité de cartouches filtrantes (10) à submerger étagées en lignes, qui pénètrent avec leur face active dans la chambre à pulpe et dont le volume intérieur creux communique avec la chambre à filtrat, dans lequel le tube d'entrée (2) est placé en position essentiellement centrale dans le plateau à tubes (6) et a son embouchure dirigée contre une plaque de déviation (9) disposée dans la chambre à pulpe,
caractérisé
    – en ce que la plaque de déviation (9) est pourvue sur sa face tournée vers le plateau à tubes (6) d'une collerette perforée polygonale ou cylindrique (16), dont la paroi est parallèle à l'axe longitudinal des cartouches filtrantes,
    – en ce que la plaque de déviation (9) est centralement percée et est pourvue sur sa face située à l'opposé du tube d'entrée (2) d'un tube de trop-plein (18, 18′) qui s'étend essentiellement sur toute la hauteur active des cartouches filtrantes (10) et dont l'embouchure est dirigée contre une plaque de renvoi (19) qui s'étend dans la chambre à pulpe (7) au-dessus des cartouches filtrantes, environ perpendiculairement à l'axe longitudinal de l'enceinte,
    – et en ce que la plaque de renvoi (19) est équipée sur sa face tournée vers les cartouches filtrantes d'au moins une première collerette perforée (20) polygonale ou cylindrique.

2. Dispositif de filtrage suivant la revendication 1, caractérisé en ce que la collerette perforée (16) est disposée entre la première et la deuxième des rangées intérieures de cartouches filtrantes et s'étend sur plus de la moitié de la largeur libre entre la plaque de déviation (9) et le plateau à tubes (6).

3. Dispositif de filtrage suivant la revendication 1, caractérisé en ce que la première collerette perforée (20) présente une hauteur qui correspond à la distance entre la plaque de renvoi (19) et l'embouchure du tube de trop-plein (18, 18′).

4. Dispositif de filtrage suivant la revendication 3, caractérisé en ce qu'avant la première collerette perforée (20) est disposée une seconde collerette perforée concentrique (21) de moindre hauteur, qui est également fixée à la plaque de renvoi (19).

5. Dispositif de filtrage suivant la revendication 1, caractérisé en ce qu'un obturateur (17) est disposé à l'entrée du tube de trop-plein (18).

6. Dispositif de filtrage suivant l'une des revendications 1 à 4, caractérisé en ce que le tube de trop-plein (18′) est perforé et en ce qu'à l'intérieur de celui-ci est logé un corps de déplacement cylindrique coaxial (22), dont l'extrémité supérieure est tronquée au niveau de l'embouchure du tube de trop-plein.

7. Dispositif de filtrage suivant la revendication 6, caractérisé en ce que l'extrémité inférieure du corps de déplacement (22) est profilée conformément à l'écoulement et pénètre dans le trou de la plaque de déviation (9).

Fig. 1

Fig. 2

Fig. 3